# EUROPEAN PATENT APPLICATION

(11) **EP 2 840 515 A1**
(43) Date of publication of application: **25.02.2015**
(21) Application number: 13778273.6
(22) Date of filing: 08.03.2013
(51) Int. Cl.: G06F 17/30

(54) **METHOD, DEVICE AND COMPUTER STORAGE MEDIA FOR USER PREFERENCES INFORMATION COLLECTION**

(30) Priority: 17.04.2012 CN 201210112826
(71) Applicant: Tencent Technology Shenzhen Company Limited, Shenzhen, Guangdong 518044 (CN)
(72) Inventor: CAO, Yue, Shenzhen Guangdong 518000 (CN); CAO, Yuancheng, Shenzhen Guangdong 518000 (CN); LIU, Rui, Shenzhen Guangdong 518000 (CN); YANG, Junsong, Shenzhen Guangdong 518000 (CN); SUN, Wei, Shenzhen Guangdong 518000 (CN); WU, Keke, Shenzhen Guangdong 518000 (CN)
(74) Representative: Eisenführ Speiser
(86) International application number: PCT/CN2013/072364
(87) International publication number: WO 2013/155905

(57) **Abstract**

Disclosed are a method, device and computer storage media for user preferences information collection belonging to the computer field. The method comprises: extracting keywords which the user operation involved in the process; determining whether there is the same tag with the keyword in the pre-set tag library; if determining that there is the same tag with the keyword in the pre-set tag library, storing the same tag with the keyword into the user personal tag library. The present invention can improve the coverage and accuracy of user preferences information collection by extracting the keywords which the user operation involved in daily applications and storing the same name tag with the extracted keyword into the user personal tag library.

## Description

### TECHNICAL FIELD

The present disclosure relates to the computer technology, and in particular, to a method, a device and a computer storage medium for acquiring user preference information.

### BACKGROUND

With the development of computer and network, social networks become more and more important in lives of people. People may obtain information of interest via the social networks. The social networks, for example, microblogs, etc., may recommend contents which a user may be interested in or recommend other users sharing the same preferences to the user based on pre-acquired user preference information.

Usually, the user preference information is represented and acquired in form of tags. An existing method for acquiring the user preference information includes: offering a function of setting tags to a user by a social network; selecting, by the user via searching or clicking on hierarchical tags, the tag(s) which the user is interested in from available tags offered by the social network; saving the tag(s) selected by the user and pushing, based on the tags selected by the user, contents which the user may be interested in to the user when the user accesses the social network, by the social network.

In the process of implementing the disclosure, the inventors find at least the following problems.

In the existing technology, the user preference information is mainly acquired by initiatively clicking on the tags by the user. It is hard to ensure that every user may perform tag setting by initiatively select the tags and it is hard to ensure that the user who performs the tag setting may correctly select all the tags of interest at a time, hence the coverage and efficiency of user preference information acquisition are low.

### SUMMARY

For improving the coverage and accuracy of user preference information acquisition, a method and a device for acquiring user preference information are provided according to embodiments of the disclosure. Technical solutions are described as follows.

In one aspect, a method for acquiring user preference information is provided. The method includes:
extracting a key word involved in an operation of a user;
determining whether a preset tag library includes a tag matching with the key word; and
storing the tag matching with the key word into a personal tag library for the user if the preset tag library includes the tag matching with the key word.

The process of extracting the key word involved in the operation of the user includes:
extracting the key word in contents inputted by the user in the case that the user performs a search operation; or
extracting the key word in a subject of contents browsed by the user in the case that the user performs a browsing operation.

The personal tag library for the user includes tags and cumulative frequencies of respective tags. The process of storing the tag matching with the key word into the personal tag library for the user if the preset tag library includes the tag matching with the key word includes:
determining whether the tag matching with the key word is already stored in the personal tag library for the user;
incrementing the cumulative frequency of the tag by one if the tag matching with the key word is already stored in the personal tag library for the user; and
storing the tag and setting the cumulative frequency of the tag as 1, if the tag matching with the key word is not stored in the personal tag library for the user.

If it is determined that the preset tag library does not include the tag matching with the key word, the method further includes:
recording the key word into unclassified items, for subsequent analysis on the key word in the unclassified items and subsequent update of the tag library based on the result of analysis.

The process of extracting the key word involved in the operation of the user includes:
extracting an operating time associated with the key word when extracting the key word; the operating time includes any one of the time at which the key word is inputted, the time at which the key word is browsed and the time at which key word is extracted;
correspondingly, the personal tag library for the user further includes operating time sets corresponding to respective tags;
the process of storing the tag into the personal tag library for the user includes:
   storing the operating time associated with the key word into the operating time set corresponding to the tag.

After the process of storing the tag into the personal tag library for the user, the method further includes:
analyzing the personal tag library for the user with a preset approach and taking the result of analysis as the user preference information;
the preset approach includes one of or any combination of performing classification based on a relationship between the operating time and a preset time interval, performing ordering based on the operating time, performing ordering based on the cumulative frequency and determining, for each cumulative frequency, whether the cumulative frequency exceeds a preset threshold.

In another aspect, a device for acquiring user preference information is provided. The device includes:
an extraction module configured to extract a key word involved in an operation of a user;
a determination module configured to determine whether a preset tag library includes a tag matching with the key word; and
a storage module configured to store the tag matching with the key word into a personal tag library for the user if it is determined by the determination module that the preset tag library includes the tag matching with the key word.

The extraction module includes: a first extraction unit and a second extraction unit.

The first extraction unit is configured to extract the key word from contents inputted by the user in the case that the user performs a search operation.

The second extraction unit is configured to extract the key word from a subject of contents browsed by the user in the case that the user performs a browsing operation.

The personal tag library for the user includes tags and cumulative frequencies of respective tags.

The storage module further includes: a determination unit and a storage unit.

The determination unit is configured to determine whether the tag matching with the key word is already stored in the personal tag library for the user.

The storage unit is configured to increment the cumulative frequency of the tag by one if it is determined by the determination unit that the tag matching with the key word is already stored in the personal tag library for the user.

The storage unit is further configured to store the tag and set the cumulative frequency of the tag as 1 if it is determined by the determination unit that the tag matching with the key word is not stored in the personal tag library for the user.

The device further includes:
a recording module, configured to, if it is determined by the determination module that the preset tag library does not comprise the tag matching with the key word, record the key word into unclassified items, for subsequent analysis on the key word in the unclassified items and subsequent update of the tag library based on the result of analysis.

The extraction module further includes a time extraction unit, configured to extract an operating time associated with the key word when extracting the key word; the operating time may be any one of the time at which the key word is inputted, the time at which the key word is browsed and the time at which key word is extracted;
correspondingly, the personal tag library for the user may include operating time sets corresponding to respective tags;
the storage unit is further configured to store the operating time associated with the key word into the operating time set corresponding to the tag.

The device further includes:
an analysis module, configured to analyze the personal tag library for the user with a preset approach and take the result of analysis as the user preference information; the preset approach includes one of or any combination of performing classification based on a relationship between the operating time and a preset time interval, performing ordering based on the operating time, determining, for each cumulative frequency, whether the cumulative frequency exceeds a preset threshold and performing ordering based on the cumulative frequency.

An advantage of the technical solutions is described as follows.

The coverage and accuracy of user preference information acquisition are improved by extracting the key word involved in the operation of the user during daily use and storing the tag matching with the key word into the personal tag library for the user.

### BRIEF DESCRIPTION OF DRAWINGS

For explaining technical solutions according to embodiments of the disclosure more clearly, drawings used in the illustration of the embodiments of the disclosure are described briefly; apparently, the drawings in the following description are merely some of the embodiments of the disclosure, and other drawings may be obtained based on the drawings by those skilled in the art without inventive efforts.
Figure 1 is a flow chart of a method for acquiring user preference information according to a first embodiment of the disclosure;
Figure 2 is a flow chart of a method for acquiring user preference information according to a second embodiment of the disclosure;
Figure 3 is a structure block diagram of a device for acquiring user preference information according to a third embodiment of the disclosure; and
Figure 4 is a structure block diagram of a device for acquiring user preference information according to a fourth embodiment of the disclosure.

### DETAILED DESCRIPTION OF EMBODIMENTS

For explaining technical solutions and advantages of the disclosure more clearly, embodiments of the disclosure are further described hereinafter in conjunction with drawings.

### A first embodiment:

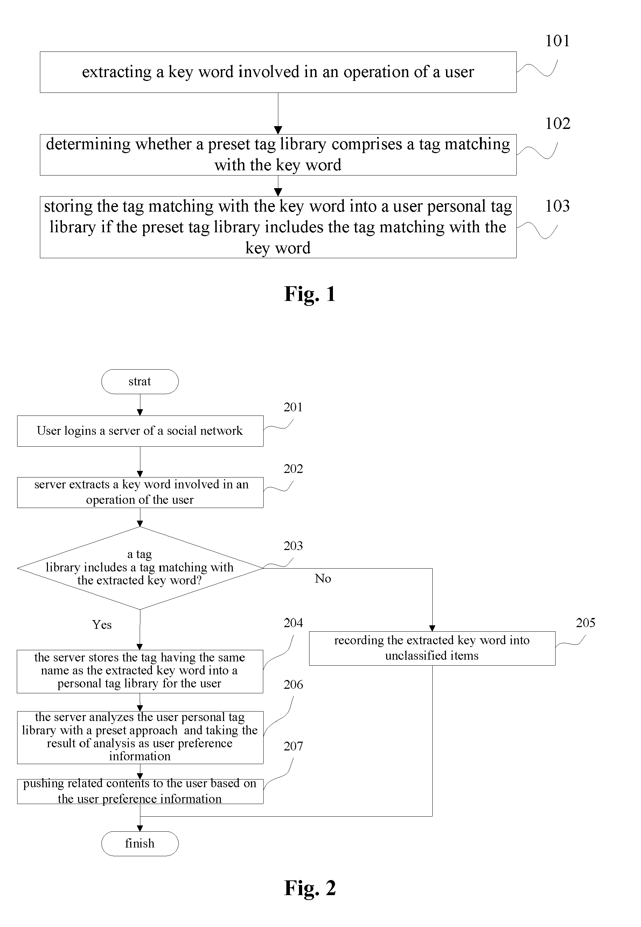

Referring Figure 1, a flow chart of a method for acquiring user preference information according to the first embodiment of the disclosure is illustrated. The method for acquiring user preference information may include steps 101-103.

The step 101 is to extract a key word involved in an operation of a user.

When a user performs, in a social network, a search operation or a click to browse operation, a server may extract the key word involved in the search operation or the click operation by performing word segmentation on contents searched for by the user or a subject browsed by the user.

The step 102 is to determine whether a preset tag library includes a tag matching with the key word.

The server compares the extracted key word with the names of the tags in the preset tag library to determine whether the preset tag library includes the tag matching with the key word.

The step 103 is to store the tag matching with the key word into a personal tag library for the user if the preset tag library includes the tag matching with the key word.

The server sets a personal tag library for each user, for storing the tags matching with the extracted key words.

In the method for acquiring user preference information according to the first embodiment, the coverage and accuracy of user preference information acquisition are improved by extracting the key word involved in the operation of the user during daily use and storing the tag having a same name as the extracted key word into the personal tag library for the user.

### A second embodiment:

Referring Figure 2, a flow chart of a method for acquiring user preference information according to the second embodiment of the disclosure is illustrated. The method for acquiring user preference information, applicable in a server of a social network, may include steps 201-206.

The step 201 is to login a server of a social network by a user.

The user may login the server of the social network through identification information including a unique identity. For example, the user may access the social network with a pre-registered account, where the pre-registered account may be either a string (e.g., an email address, user name, etc.) inputted by the user or a string (e.g., a Tencent QQ account) allocated by the server. This step is known in the art and is not limited in this embodiment of the present disclosure.

The step 202 is to extract, by the server, a key word involved in an operation of the user.

The server may record the operation of the user performed in the social network and extract the key word involved in the operation of the user based on the recorded operation, where the operation of the user may include a search operation or a browsing operation of the user.

In the case that the user performs the search operation, the server may perform word segmentation on a string inputted in a search box by the user and extract the key word based on the result of word segmentation.

In the case that the user performs the browsing operation, for example, in the case that the user clicks a link to browse an article or the user clicks, after browsing the article, a recommended links offered below the article to further browse other related contents, word segmentation is performed on a subject of the contents browsed by the user, and the key word is extracted based on the result of word segmentation.

When performing word segmentation on the string inputted by the user or on a subject browsed by the user, the string inputted by the user or a subject browsed by the user may be compared with a preset word library and the key word is extracted. For example, in the case the user inputs "concert of Andy Lau" in the search bar or the user browses the article with a subject of "concert of Andy Lau", the server may segment the string of "concert of Andy Lau" into multiple independent phrases and compare the phrases obtained through word segmentation with the preset word library. If two words of "Andy Lau" and "concert", included in the phrases, exist in the preset word library, those two words are extracted as the key words.

It should be noted that, in practice, the extracting of the key words may be performed on other operations of the user and it is not limited to perform the extracting of the key words by word segmentation. Therefore, how the key words are extracted is not limited according to the embodiment of the disclosure.

The step 203 is to determine whether a tag library includes a tag having the same name as with the extracted key word; if the tag library includes the tag having the same name as with the extracted key word, the procedure proceeds to the step 204; if the tag library does not include the tag having the same name as the extracted key word, the procedure proceeds to the step 205.

The server compares the extracted key word with the tags included in the tag library to determine whether the tag library includes the tag having a same name as the extracted key word; if the tag library includes the tag matching with the key word, the step 204 is proceeded to; if the tag library does not include the tag matching with the key word, the step 205 is proceeded to.

The server may set the tag library in advance. The tag library may store a multiple-to-one hierarchical tag system of "key word-tag". The hierarchical tag system is a tag system including multi levels of tags, each of the tags has a tag name, and a plurality of lower-level tags of the same type correspond to one higher-level tag. For example, a tag named "Food" corresponds to a plurality of lower-level tags such as tags named "Chinese Food", "Western Food", etc., the tag of "Chinese Food" may further corresponds to lower-level tags, e.g., tags of "Szechuan Food", "Cantonese Food", "Jiangsu Food", and the tag of "Szechuan Food" may correspond to lower-level tags of dishes. As another example, a tag named "Singers" corresponds to lower-levels of "Chinese Singers", "European and American Singers", "Japanese and Korean Singers", etc., the tag of "Chinese Singers" further corresponds to lower-levels of "Hong Kong and Taiwan Male Singers", "Hong Kong and Taiwan Female Singers", "Mainland Male Singers", "Mainland Female Singers", etc., and the tag of "Hong Kong and Taiwan Male Singers" may further correspond to a plurality of lower-levels of singer names. It should be noted that, in practice, besides the hierarchical tag system, the tags may be stored in the tag library in other ways, and the embodiment of the disclosure is not limited in this aspect.

The step 204 is to store, by the server, the tag having the same name as the extracted key word into a personal tag library for the user.

For each user, the server may set a personal tag library for the user for storing the tag matching with the key word involved in the operation of the user and a cumulative frequency of the key word.

In practice, the server determines in advance whether the tag having the same name as the extracted key word is already stored in the personal tag library for the user; if the tag having the same name as the extracted key word is already stored in the personal tag library for the user, the cumulative frequency of the tag is incremented by one; if the tag having the same name as the extracted key word is not stored in the personal tag library for the user, the tag is added into the personal tag library for the user and the cumulative frequency of the tag is set as 1.

The step 205 is to record the extracted key word into unclassified items.

If the preset tag library does not include the tag having the same name as the key word, the key word is recorded into the unclassified items for subsequent analysis and classification. The server may periodically analyze the key word in the unclassified items and upgrade the hierarchical tag system of the tag library based on the result of analysis.

Furthermore, according to another embodiment, in the step 202, when the server records the operation of the user in the social network, meanwhile, the server further records operating time. The recorded operating time may be any one of the time at which the user inputs the string to perform a search, the time at which the user clicks to browse and the time at which the server extracts the key word. Correspondingly, in the step 204, besides the tags and the cumulative frequencies of the tags, operating time corresponding to each tag is further stored in the personal tag library for the user. For each tag, a corresponding operating time set may be provided in the personal tag library for the user, for storing the operating time at which the tag is stored.

The step 206 is to analyze the personal tag library for the user with a preset approach by the server and take the result of analysis as the user preference information.

There are many preset approaches of analysis, for example, performing classification based on a relationship between the operating time and a preset time interval, performing ordering based on the operating time, performing ordering based on the cumulative frequency and determining, for each cumulative frequency, whether the cumulative frequency exceeds a preset threshold, etc. In practice, the server may analyze the personal tag library for the user with one or any combination of the foregoing approaches. In addition, the user preference information includes: long-term preferences of the user, short-term preferences of the user, fluctuation of population favoring the tags with time, rankings of users regarding long-term preference or short-term preference for each tag, etc.

The approaches of analysis are described with the following examples.

The short-term preference information of a user may be obtained with the combination of performing classification based on the relationship between the operating time and a preset time interval, performing ordering based on the operating time and performing ordering based on the cumulative frequency.

The server obtains the tags stored in the personal tag library for the user in a preset duration as a short-term tag library of the user. The tags in the short-term tag library are ordered based on the cumulative frequencies, and the result of ordering is taken as the short-term preference information of the user. For example, for each user, the server may create a short-term tag library and set a week as the preset duration. In the end of the week, the server counts the cumulative frequencies in the week for all the tags in the personal tag library for the user based on the recorded operating time. The server may represent the cumulative frequencies of the tags in a form of scores (for example, each time when the cumulative frequency of a tag increments by 1, the score of the tag is incremented by 10). The server adds the tags with non-zero scores in the week into the short-term tag library of the user and deletes former tags (which usually are the tags added last week) in the short-term tag library of the user. For instance, if the result of analysis indicates that three tags (tag A, tag B and tag C) are scored a, b, and c, respectively, in the week, the server may add tag A, tag B and tag C into the short-term tag library of the user, order the tag A, tag B and tag C in the short-term tag library by scores a, b and c in a descending order and meanwhile delete the tags added in the short-term tag library last week, therefore the short-term preferences of the user is accordingly reflected in real time.

In addition, long-term preference information of the user may be obtained by determining whether the cumulative frequency exceeds the preset threshold.

For each user, the server may create a long-term tag library and add into the long-term tag library of the user the tag(s) having the cumulative frequency exceeding the preset threshold or the tag(s) which is(are) added into the short-term tag library of the user for multiple times. The server may count the scores of all the tags in the personal tag library for the user and add the tags having the scores exceeding the preset threshold into the long-term tag library of the user. Alternatively, each time when a tag is added into the short-term tag library of the user, the server stamps the tag with a mark. When the cumulative frequency of the mark exceeds the preset threshold, the tag is added into the long-term tag library of the user. At the same time, the server orders all the tags in the long-term tag library of the user based on the scores regarding the cumulative frequencies of the tags, and takes the result of ordering as the long-term preferences of the user.

Furthermore, information such as rankings of users regarding long-term preference or short-term preference for each tag, etc., may be obtained with the combination of the forgoing approaches.

The server may further rank the users based on the scores gained by a tag in the week in the short-term tag libraries of the users to obtain a ranking list of the users regarding short-term preference for this tag. In addition, the server may further gather the long-term tag libraries of all the users, and rank the users based on the total scores of a tag in the long-term tag libraries of all the users to obtain a ranking list of the users regarding long-term preference for the tag.

Furthermore, the fluctuation of population favoring the tags with time may be further obtained based on the obtained user preference information. For example, the server gathers the short-term tag libraries of all the users in the week, obtains the population favoring a tag in the week based on occurrences of the tag in the short-term tag libraries of different users, and obtains fluctuation information of the population favoring the tag in a time period based on the population favoring the tag in all historical weeks. For instance, a two-dimensional coordinate system of "time vs population" is established to intuitively show the fluctuation of the population favoring the tag in a time period. Approaches for representing the fluctuation information of the population favoring the tag with time are not limited according to the embodiment of the disclosure.

It should be noted that, there are many approaches for selecting the preset duration. For example, the preset duration may be set as 5 days or two weeks. In addition, there are also many approaches for ordering the tags in the short-term tag libraries of the users and the tags in the long-term tag libraries of the users. For example, ordering may be performed based on the cumulative frequencies of the tags. The approaches for selecting the preset duration and for ordering the tags are not limited according to the embodiment of the disclosure.

The step 207 is to push contents to the user based on the user preference information.

When the user accesses the social network, a social network system may push the contents in which the user may be interested to the user based on the long-term preference information of the user and the short-term preference information of the user included in the user preference information, or push recent popular contents to the user based on the fluctuation of the population favoring the tags with time. The server may further recommend, to the user, other users having the same preference as the user based on the rankings of the users favoring the respective tags. Furthermore, the server may recommend, to the user, the contents corresponding to other tags favored by the users having the same preference as the user.

It should be noted that, in practice, there are many approaches for analyzing the personal tag library for the user, there are many types of the user preference information, and there are also many approaches for pushing services to the user based on user preferences. This embodiment of the disclosure is merely explained with the foregoing examples and is not meant to limit the approaches for analyzing the personal tag library for the user, the types of the user preference information, and the approaches for pushing services to the user based on user preferences.

In the method for acquiring the user preference information according to the second embodiment of the disclosure, the coverage and accuracy for acquiring the user preference information are improved by extracting the key word involved in the operation of the user during daily use and storing the tag matching with the key word into the personal tag library for the user. At the same time, in the method for acquiring user preference information according to the second embodiment, a personal tag system for the user is obtained by recording the operating time and gathering the cumulative frequency and the corresponding operating time of the respective tags in the personal tag library for the user. Hence, the timeliness for acquiring the user preference information is improved.

### A third embodiment and a fourth embodiment:

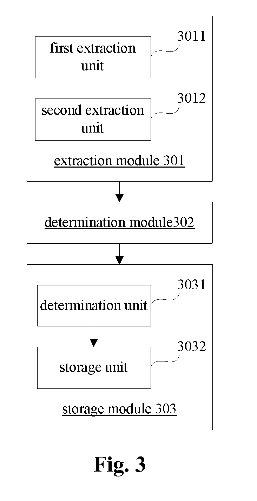

Referring Figure 3, a structure diagram of a device for acquiring user preference information according to the third embodiment of the disclosure is illustrated. The device for acquiring user preference information, applicable in a server of a social network, includes an extraction module 301, a determination module 302 and a storage module 303.

The extraction module 301 is configured to extract a key word involved in an operation of a user.

The determination module 302 is configured to determine whether a preset tag library includes a tag matching with the key word.

The storage module 303 is configured to store the tag matching with the key word into a personal tag library for the user if it is determined by the determination module 302 that the preset tag library includes the tag matching with the key word.

The extraction module 301 may include: a first extraction unit 3011 and a second extraction unit 3012.

The first extraction unit 3011 is configured to extract the key word from contents inputted by the user in the case that the user performs a search operation.

The second extraction unit 3012 is configured to extract the key word from a subject of contents browsed by the user in the case that the user performs a browsing operation.

The personal tag library for the user includes tags and cumulative frequencies of respective tags.

The storage module 303 may include: a determination unit 3031 and a storage unit 3032.

The determination unit 3031 is configured to determine whether the tag matching with the key word is already stored in the personal tag library for the user.

The storage unit 3032 is configured to increment the cumulative frequency of the tag by one if it is determined by the determination unit 3031 that the tag matching with the key word is already stored in the personal tag library for the user.

The storage unit 3032 is further configured to store the tag and set the cumulative frequency of the tag as 1 if it is determined by the determination unit 3031 that the tag matching with the key word is not stored in the personal tag library for the user.

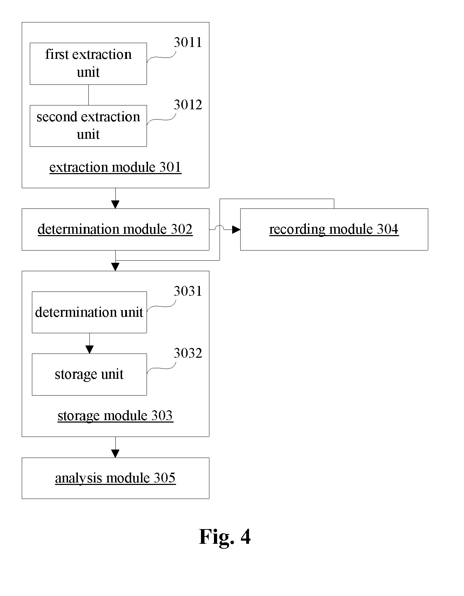

Referring Figure 4, a structure diagram of a device for acquiring user preference information according to the fourth embodiment of the disclosure is illustrated. The device for acquiring user preference information may further include a recording module 304. The recording module 304 is configured to, if it is determined by the determination module 302 that the preset tag library does not include the tag matching with the key word, record the key word into unclassified items, for subsequent analysis on the key word in the unclassified items and subsequent update of the tag library based on the result of analysis.

As shown in Figure 3 and Figure 4, the extraction module 301 may further include a time extraction unit 3011, configured to extract an operating time associated with the key word when extracting the key word. The operating time may be any one of the time at which the key word is inputted, the time at which the key word is browsed and the time at which key word is extracted.

Correspondingly, the personal tag library for the user may include operating time sets corresponding to respective tags. The storage unit 3032 is further configured to store the operating time associated with the key word into the operating time set corresponding to the tag.

To obtain information such as long-term preferences of the user, short-term preferences of the user, etc., the device for acquiring user preference information may further include an analysis module 305. The analysis module 305 is configured to analyze the personal tag library for the user with a preset approach and take the result of analysis as the user preference information. The preset approach includes one or any combination of performing classification based on a relationship between the operating time and a preset time interval, performing ordering based on the operating time, determining, for each cumulative frequency, whether the cumulative frequency exceeds a preset threshold and performing ordering based on the cumulative frequency.

In the device for acquiring the user preference information according to the third embodiment and the fourth embodiment, the coverage and accuracy for acquiring user preference information are improved by extracting the key word involved in the operation of the user during daily use and storing the tag matching with the key word into the personal tag library for the user. At the same time, the user preferences are obtained by recording the operating time and gathering the cumulative frequency and the corresponding operating time of the respective tags in the personal tag library for the user, hence the timeliness for acquiring the user preference information is improved.

It should be noted that, in the description of the device for acquiring user preference information, the foregoing division of the functional modules is exemplary. In practice, the functions may be implemented by different functional modules as required. That is to say, the inner structure of the device is divided into different functional modules to implement all or part of the described functions. In addition, the device for acquiring user preference information according to the embodiments of the disclosure is based on the same conception as the method for acquiring user preference information according to the embodiments of the disclosure and the implementation of the device for acquiring user preference information may be referred to the description for the method, for which no detail is given here.

It should be understood by those skilled in the art that, part of or all of the steps according to the embodiments may be accomplished through hardware or corresponding hardware instructed with a program. The program may be stored in a computer readable storage medium. The computer readable storage medium may include: magnetic disk, Compact Disk, Read Only Memory (ROM), Random Access Memory (RAM).

The described embodiments are merely preferred embodiments of the disclosure. The embodiments are not intended to limit the disclosure. Any change, equivalent replacement, modification, etc., without departing from the spirit and principle of the disclosure should fall in the scope of protection of the disclosure.

## Claims

1. A method for acquiring user preference information, comprising:
extracting a key word involved in an operation of a user;
determining whether a preset tag library comprises a tag matching with the key word; and
storing the tag matching with the key word into a personal tag library for the user if the preset tag library comprises the tag matching with the key word.

2. The method according to claim 1, wherein extracting the key word involved in the operation of the user comprises:
extracting the key word in contents inputted by the user in the case that the user performs a search operation; or
extracting the key word in a subject of contents browsed by the user in the case that the user performs a browsing operation.

3. The method according to claim 1, wherein the personal tag library for the user comprises tags and cumulative frequencies of respective tags; wherein storing the tag matching with the key word into the personal tag library for the user if the preset tag library comprises the tag matching with the key word comprises:
determining whether the tag matching with the key word is already stored in the personal tag library for the user; and
incrementing the cumulative frequency of the tag by one if the tag matching with the key word is already stored in the personal tag library for the user; or storing the tag and setting the cumulative frequency of the tag as 1 if the tag matching with the key word is not stored in the personal tag library for the user.

4. The method according to claim 1, wherein if it is determined that the preset tag library does not comprise the tag matching with the key word, the method further comprises:
recording the key word into unclassified items, for subsequent analysis on the key word in the unclassified items and subsequent update of the tag library based on the result of analysis.

5. The method according to any one of claims 1-4, wherein extracting the key word involved in the operation of the user comprises:
extracting an operating time associated with the key word when extracting the key word, wherein the operating time comprises any one of the time at which the key word is inputted, the time at which the key word is browsed and the time at which key word is extracted;
wherein the personal tag library for the user further comprises operating time sets corresponding to respective tags;
wherein storing the tag matching with the key word into the personal tag library for the user comprises:
storing the operating time associated with the key word into the operating time set corresponding to the tag.

6. The method according to claim 5, wherein after storing the tag into the personal tag library for the user, the method further comprises:
analyzing the personal tag library for the user with a preset approach and taking the result of analysis as the user preference information;
wherein the preset approach comprises one of or any combination of performing classification based on a relationship between the operating time and a preset time interval, performing ordering based on the operating time, performing ordering based on the cumulative frequency, or determining, for each cumulative frequency, whether the cumulative frequency exceeds a preset threshold.

7. A device for acquiring user preference information, comprising:
an extraction module, configured to extract a key word involved in an operation of a user;
a determination module, configured to determine whether a preset tag library comprises a tag matching with the key word; and
a storage module, configured to store the tag matching with the key word into a personal tag library for the user if it is determined by the determination module that the preset tag library comprises the tag matching with the key word.

8. The device according to claim 7, wherein the extraction module comprises a first extraction unit and a second extraction unit, wherein the first extraction unit is configured to extract the key word from contents inputted by the user in the case that the user performs a search operation; and the second extraction unit is configured to extract the key word from a subject of contents browsed by the user in the case that the user performs a browsing operation.

9. The device according to claim 7, wherein the personal tag library for the user comprises tags and cumulative frequencies of respective tags;
wherein the storage module comprises a determination unit and a storage unit,
the determination unit is configured to determine whether the tag matching with the key word is already stored in the personal tag library for the user;
the storage unit is configured to increment the cumulative frequency of the tag by one if it is determined by the determination unit that the tag matching with the key word is already stored in the personal tag library for the user; and
the storage unit is further configured to store the tag and set the cumulative frequency of the tag as 1 if it is determined by the determination unit that the tag matching with the key word is not stored in the personal tag library for the user.

10. The device according to claim 7, wherein the device further comprises:
a recording module, configured to, if it is determined by the determination module that the preset tag library does not comprise the tag matching with the key word, record the key word into unclassified items, for subsequent analysis on the key word in the unclassified items and subsequent update of the tag library based on the result of analysis.

11. The device according to any one of claims 7-10, wherein the extraction module further comprises:
a time extraction unit, configured to extract an operating time associated with the key word when extracting the key word, wherein the operating time comprises any one of the time at which the key word is inputted, the time at which the key word is browsed and the time at which key word is extracted;
wherein the personal tag library for the user comprises operating time sets corresponding to respective tags;
wherein the storage unit is further configured to store the operating time associated with the key word into the operating time set corresponding to the tag matching with the key word.

12. The device according to claim 11, wherein the device further comprises:
an analysis module, configured to analyze the personal tag library for the user with a preset approach and take the result of analysis as the user preference information;
wherein the preset approach comprises one of or any combination of performing classification based on a relationship between the operating time and a preset time interval, performing ordering based on the operating time, determining, for each cumulative frequency, whether the cumulative frequency exceeds a preset threshold, or performing ordering based on the cumulative frequency.

13. A computer storage medium comprising computer executable instructions, wherein the computer executable instructions are configured to implement a method for acquiring user preference information, the method comprises:
extracting a key word involved in an operation of a user;
determining whether a preset tag library comprises a tag matching with the key word; and
storing the tag matching with the key word into a personal tag library for the user if the preset tag library comprises the tag matching with the key word

14. The computer storage medium according to claim 13, wherein extracting the key word involved in the operation of the user comprises:
extracting the key word in contents inputted by the user in the case that the user performs a search operation; or
extracting the key word in a subject of contents browsed by the user in the case that the user performs a browsing operation.

15. The computer storage medium according to claim 13, wherein the personal tag library for the user comprises tags and cumulative frequencies of respective tags; wherein storing the tag matching with the key word into the personal tag library for the user if the preset tag library comprises the tag matching with the key word comprises:
determining whether the tag matching with the key word is already stored in the personal tag library for the user;
incrementing the cumulative frequency of the tag by one if the tag matching with the key word is already stored in the personal tag library for the user; or storing the tag and setting the cumulative frequency of the tag as 1 if the tag matching with the key word is not stored in the personal tag library for the user.

16. The computer storage medium according to claim 13, wherein if it is determined that the preset tag library does not comprise the tag matching with the key word, the method further comprises:
recording the key word into unclassified items, for subsequent analysis on the key word in the unclassified items and subsequent update of the tag library based on the result of analysis.

17. The computer storage medium according to any one of claims 13-16, wherein extracting the key word involved in the operation of the user comprises:
extracting an operating time associated with the key word when extracting the key word, wherein the operating time comprises any one of the time at which the key word is inputted, the time at which the key word is browsed and the time at which key word is extracted;
wherein the personal tag library for the user further comprises operating time sets corresponding to respective tags;
wherein storing the tag matching with the key word into the personal tag library for the user comprises:
storing the operating time associated with the key word into the operating time set corresponding to the tag.

18. The computer storage medium according to claim 17, wherein after storing the tag into the personal tag library for the user, the method further comprises:
analyzing the personal tag library for the user with a preset approach and taking the result of analysis as the user preference information;
wherein the preset approach comprises one of or any combination of performing classification based on a relationship between the operating time and a preset time interval, performing ordering based on the operating time, performing ordering based on the cumulative frequency, or determining, for each cumulative frequency, whether the cumulative frequency exceeds a preset threshold.
